(19) Europäisches Patentamt
European Patent Office
Office européen des brevets

(11) Publication number: 0 103 871 A2

(12) # EUROPEAN PATENT APPLICATION

(21) Application number: 83109203.6

(22) Date of filing: 16.09.83

(51) Int. Cl.³: C 08 G 77/12
C 08 G 77/06, C 08 G 77/08

(30) Priority: 17.09.82 JP 162731/82

(43) Date of publication of application: 28.03.84 Bulletin 84/13

(84) Designated Contracting States: BE DE FR GB

(71) Applicant: Toray Silicone Company Limited
2-8 Nihonbashi Muromachi
Chuo-ku Tokyo 103(JP)

(72) Inventor: Isao, Ona
2848-46 Kubota Sodegaura-machi
Kimitsu-gun Chiba Prefecture(JP)

(72) Inventor: Masazu, Ozaki
1-6 Yushudainishi
Ichihara City Chiba Prefecture(JP)

(72) Inventor: Yoichiro, Taki
1-6 Yushudainishi
Ichihara City Chiba Prefecture(JP)

(74) Representative: Spott, Gottfried, Dr. et al,
Patentanwälte Spott und Puschmann
Sendlinger-Tor-Platz 11
D-8000 München 2(DE)

(54) **Carboxylic acid functional organopolysiloxane emulsions.**

(57) A method of manufacturing diorganopolysiloxane emulsions where the diorganopolysiloxane contains carboxylic acid functional groups is described. The method involves the emulsion co-polymerization of a non-carboxylic acid containing diorganopolysiloxane with either a diorganodialkoxysilane or diorganopolysiloxane which contains at least one unit of general formula

$$\left( \begin{matrix} RSiO \\ | \\ R^1COOR^2 \end{matrix} \right)$$

in the presence of a surface active sulfonic acid and water. The emulsions obtained by this method exhibit excellent storage stability, dilution stability and shear strength stability.

EP 0 103 871 A2

# CARBOXYLIC ACID FUNCTIONAL ORGANOPOLYSILOXANE EMULSIONS

The present invention relates to a method of manufacturing novel diorganopolysiloxane emulsions. More specifically, it concerns a method of manufacturing emulsions of diorganopolysiloxane having carboxylic acid functional groups within the molecule by emulsion polymerization.

Diorganopolysiloxanes having carboxylic acid functional groups within the molecule have been proposed as mold releasing agents (see Japanese Patent No. Sho 54[1979]-239 and United States Patent 4,076,695 issued February 28, 1978), as automotive lubricants (see United States Patent 3,960,574 issued June 1, 1976), as treatment agents for textiles (see Japanese Kokai Patent No. 55[1980]-152864) and as paint additives (see Japanese Patent No. Sho 54[1979]-33405).

Emulsions of diorganopolysiloxanes having such carboxylic acid functional groups within the molecule can be manufactured by emulsifying them in water with a suitable emulsifier by standard mechanical techniques. Examples of suitable emulsifiers include sulfate esters of higher alcohols, alkylbenzenesulfonates, and higher alcohol polyoxyalkylene addition products or alkyl phenol polyoxyalkylene addition products (see Japanese Kokai Patent No. Sho 55[1980]-152864). The emulsions manufactured by such methods, however, generally lack storage stability, dilution stability and shear strength stability. It is also difficult to obtain homogeneous emulsions when the diroganopolysiloxanes have a high degree of polymerization.

Emulsion polymerization has been employed to produce diorganopolysiloxane emulsions with good storage stability. One method of emulsion polymerization of

organopolysiloxane employs either a strong mineral acid or strong alkali catalyst as described in either Japanese Patent No. Sho. 34[1959]-2041 or United States Patent 2,891,920 (issued June 23, 1959). Another method employs a surface active sulfonic acid for the emulsion polymerization of organopolysiloxanes as taught in Japanese Patent No. Sho 41[1966]-13995 and U.S. Patent 3,294,725 (issued December 27, 1966). Still another method of emulsion polymerization is detailed in Japanese Patent No. Sho 46[1971]-41038 which involves emulsification of the organopolysiloxane in water with polyoxyethylene sulfate ester followed by polymerization. U.S. Patent 3,360,491 (issued December 26, 1967) used an alkyl hydrogen sulfate as the catalyst and surfactant in the emulsion polymerization of organopolysiloxanes. None of these patents either teaches or even alludes to the preparation of carboxylic acid functional diorganopolysiloxane emulsions by the technique of emulsion polymerization.

An object of the present invention is to provide a method of producing emulsions of diorganopolysiloxanes containing carboxylic acid functional groups where the emulsions have good storage stability, dilution stability, and shear strength stability. Other objects will be apparent to those skilled in the art upon consideration of this specification.

## The Invention

This invention relates to a method of manufacturing an emulsion of a first diorganopolysiloxane, said method comprising the emulsion co-polymerization of

(A) a liquid cyclic or linear second diorganopolysiloxane with a degree of polymerization of at least three where the organo radicals of said second diorganopolysiloxane are selected from the group consisting of alkyl radicals, alkenyl radicals, aryl radicals, cycloalkyl radicals, cycloalkenyl radicals, aralkyl radicals, alkylaryl radicals, haloalkyl radicals, and mercaptoalkyl radicals and the endblocking groups on said linear second diorganopolysiloxane are selected from the group consisting of hydroxyl groups, alkoxy groups, acyloxy groups, and univalent hydrocarbon groups; and

(B) a liquid diorganodialkoxysilane or liquid cyclic or linear third diorganopolysiloxane with a degree of polymerization of at least three, where said diorganodialkoxysilane or said third diorganopolysiloxane contains at least one unit of formula

$$\left\{ \begin{array}{l} RSiO \\ \;\;| \\ \;R^{1}COOR^{2} \end{array} \right\}$$

where R is a monovalent hydrocarbon radical, $R^1$ is a divalent hydrocarbon radical, and $R^2$ is selected from the group consisting of hydrogen, a univalent hydrocarbon radical, and a univalent cation;

in the presence of

(C) a sulfonic acid surfactant and

(D) water.

The first diorganopolysiloxane prepared by the method of this invention will have a higher degree of polymerization than either component (A) or component (B) and a lower content of units of formula

$$\{\underset{\substack{| \\ R^{1}COOR^{2}}}{RSiO}\}$$

than component (B). In other words, the emulsion prepared by the method of this invention will contain a first diorganopolysiloxane prepared by the emulsion co-polymerization of components (A) and (B) in the presence of component (D) and (C); and the first diorganopolysiloxane is a co-polymer of components (A) and (B).

Component (A) may be a cyclic diorganopolysiloxane. Although not wishing to limit our invention by theory, we believe that in the practice of our invention the cyclic diorganopolysiloxane of component (A) is emulsified along with component (B) in water (component (D)) by the sulfonic acid surfactant (component (C)), after which component (A) undergoes a ring-opening reaction through the catalytic acid of component (C) and is finally polymerized with component (B) or its hydrolyzate. The cyclic diorganopolysiloxane should have a degree of polymerization of at least three and should be liquid at normal temperatures. By normal temperatures we mean the temperatures at which the emulsion polymerization can be carried out. It is preferred that the degree of polymerization be in the range of 3 to 6. The cyclic diorganopolysiloxane can be described by the general formula

$$(R_2SiO)_x$$

where $\underline{x}$ is the degree of polymerization and R is a monovalent hydrocarbon or substituted hydrocarbon radical. For example, R may, independently, be alkyl radicals such as methyl radicals, ethyl radicals and propyl radicals; alkenyl radicals such as vinyl radicals; aryl radicals such as phenyl radicals, xenyl radicals and naphthyl radicals; cycloalkyl radicals such as cyclohexyl

radicals; cycloalkenyl radicals such as cyclohexenyl radicals; aralkyl radicals such as benzyl radicals; alkylaryl radicals such as tolyl radicals and xylyl radicals; haloalkyl radicals such as 3-chloropropyl groups, 3,3,3-trifluoropropyl radicals; or mercaptoalkyl radicals such as 3-mercaptopropyl radicals. It is preferred that the cyclic diorganopolysiloxane contain methyl radicals and it is most preferred that the cyclic diorganopolysiloxane contain only methyl radicals.

Component (A) may also be a linear diorganopolysiloxane. It is believed that the linear diorganopolysiloxane (A) is emulsified along with component (B) in component (D) by component (C) and then polymerized with component (B) or its hydrolysate through the catalytic action of component (C). There are no particular limitations on the linear diorganopolysiloxane (A) as long as the degree of polymerization is at least three and it is liquid at normal temperatures. It is preferred that the degree of polymerization of the linear diorganopolysiloxane (A) be in the range of 3 to 100. The organic groups attached to silicon are the same as those R radicals described for the cyclic diorganopolysiloxane. The ends of the molecular chains are not especially limited. Examples of possible endblocking groups include hydroxyl groups, alkoxy groups, acyloxy groups and univalent hydrocarbon groups such as methyl groups, ethyl groups, phenyl groups and vinyl groups.

Component (B) may be either a diorganodialkoxysilane or a cyclic or linear diorganopolysiloxane which contains at least one unit of formula

$$
\begin{array}{l}
-\!\!(RSiO)\!\!- \\
\quad | \\
\quad R^1COOR^2
\end{array}
$$

where R is a monovalent hydrocarbon radical, $R^1$ is a divalent hydrocarbon radical, and $R^2$ is selected from the group consisting of hydrogen, a univalent hydrocarbon radical, and a univalent cation. An example of a diorganodialkoxysilane (B) is given by the formula

$$
\begin{array}{c}
R \\
| \\
R^3O-Si-OR^3 \\
| \\
R^1COOR^2
\end{array}
$$

where R, $R^1$, and $R^2$ are defined above and $R^3$ is an alkyl group. R has the same examples as listed earlier in the discussion of component (A). Examples of the divalent hydrocarbon radical $R^1$ include the ethylene radical, n-propylene radical, isopropylene radical, and phenylene radical. Examples of $R^2$, when a univalent hydrocarbon radical, are the same as given for R. Preferable $R^2$, when a univalent hydrocarbon radical, contains from 1 to 6 carbon atoms. Examples of $R^2$, when a univalent cation, include $Na^+$, $K^+$, and $NH_4^+$. Therefore the $-R^1COOR^2$ group includes the free carboxylic acid, carboxylic acid esters, and carboxylic acid salts. Examples of $R^3$ include, for example, methyl, ethyl, propyl, hexyl, and vinyl radicals.

The diorganopolysiloxane of component (B) having at least one unit of formula

$$
\begin{array}{l}
-\!\!(RSiO)\!\!- \\
\quad | \\
\quad R^1COOR^2
\end{array}
$$

may be either cyclic or linear. R, $R^1$, and $R^2$ have the same definitions as given earlier. When the diorganopolysiloxane (B) is cyclic there are no particular limitations except that the degree of polymerization should be at least three and that the

siloxane should be liquid at normal temperatures. A degree of polymerization of 3 to 6 is preferred. When the diorganopolysiloxane (B) is linear there are no particular limitations as long as the degree of polymerization is at least 3 and it is liquid at normal temperatures. A degree of polymerization between 3 and 100 for the linear diorganopolysiloxane (B) is preferable for ease of preparing the emulsion. Whether cyclic or linear, this diorganopolysiloxane may be constructed only of units expressed by the formula

$$\underset{R^1COOR^2}{\{RSiO\}}$$

or of both this unit and other diorganosiloxane units. Examples of other diorganosiloxane units include dimethylsiloxane units, methylphenylsiloxane units, methylvinylsiloxane units and methyl(3,3,3-trifluoropropyl)siloxane units. Examples of the end groups of this linear diorganopolysiloxane are the same as the end groups of the linear diorganopolysiloxane of component (A).

Component (C) is both an emulsifier and polymerization catalyst for components (A) and (B). Examples of component (C) are sulfonic acids expressed by the general formula $R^4C_6H_4SO_3H$ and the general formula $R^5O(C_2H_4O)_mSO_3H$ where, $R^4$ is an aliphatic univalent hydrocarbon group with at least 6 carbon atoms, $R^5$ is an aliphatic univalent hydrocarbon group with at least 6 carbon atoms or univalent hydrocarbon substituted aryl group, and m is a number with an average value of 1 to 15. Specific examples of suitable surfactants include octylbenzenesulfonic acid, decylbenzenesulfonic acid, dodecylbenzenesulfonic acid, cetylbenzenesulfonic acid, myristylbenzenesulfonic acid, $CH_3(CH_2)_8CH_2O(C_2H_4O)_2SO_3H$, $CH_3(CH_2)_8CH_2O(C_2H_4O)_8SO_3H$, $CH_3(CH_2)_{10}CH_2O(C_2H_4O)_4SO_3H$,

and $CH_3(CH_2)_8CH_2-C_6H_4O(C_2H_4O)_2SO_3H$. Another example is a naphthylsulfonic acid bonded to long chained alkyl groups.

Component (D), water, is the emulsification medium for components (A) and (B). In the emulsion co-polymerization of component (A) and component (B) in the presence of component (C) and component (D), a homogenous emulsion may be prepared by passing the mixture consisting of a solution of component (C) dissolved in component (D) and a mixture of component (A) and component (B) through an emulsion apparatus such as a homogenizer, colloid mill or line mixer. After maintaining this emulsion for 1-20 hours at 40-90°C while stirring gently, it is cooled to room temperature. Next, it is made neutral or weakly alkaline by neutralizing with a base such as sodium hydroxide, potassium hydroxide, ammonia or, triethanolamine. The carboxyl groups in the generated diorganopolysiloxane may become carboxylates when the emulsified compound is made weakly alkaline.

The proportions of each of the components during the emulsion co-polymerization should be a combined total of 20-80 parts by weight of components (A) and (B) and 1-5 parts by weight of component (C) per 100 parts by weight of component (D). The relative proportion of components (A) and (B) is based on the desired content of siloxane units containing the carboxyl functional group in the resulting emulsion.

During emulsion polymerization, corrosion inhibitors, surfactants other than component (C) such as, for example, nonionic surfactants to stabilize the emulsion and protective colloids such as, for example, polyvinyl alcohol, and carboxymethylcellulose, dyes, and chain end-blocking agents such as, for example,

hexaorganodisiloxane, may be added as needed in addition to components (A)-(D).

The product obtained from such emulsion polymerization is a homogenous emulsion of diorganopolysiloxane with a higher degree of polymerization than components (A) and (B) and with a lower content of the unit expressed by the formula

$$\left(\begin{array}{c}RSiO\\ |\\ R^1COOR^2\end{array}\right)$$

than component (B). It has excellent storage stability, dilution stability and shear strength stability. This emulsion can be used as is or diluted with water as a mold releasing agent, stripping agent, textile treatment agent, hair rinse, lubricant, paint addition, defoaming agent, etc. It may also be used as an interfiber adhesive bonding agent for textiles, knits or unwoven cloth made of natural fibers, semisynthetic fibers, synthetic fibers, natural inorganic fibers (such as asbestos and rock wool), synthetic inorganic fibers (such as glass fibers, silicon carbide fibers, stainless steel fibers, and carbon fibers) and their composite materials. When used as an interfiber adhesive, the textile materials may be immersed in the neat or diluted emulsion of the present invention after which the textile materials can be wrung out sufficiently and dried at room temperature or under heat.

The emulsion of the present invention can be used alone or in combination with other silicone emulsions containing, for example, silane coupling agents or dimethylpolysiloxane as well as emulsions of reactive organopolysiloxanes such as the amino-functional siloxanes.

In order that those skilled in art may better understand how the present invention can be practiced,

the following examples are given by way of illustration and not by way of limitation. "Parts" in the examples means "parts by weight". The viscosity and refraction index values were determined at 25°C.

Example 1

A cyclic dimethylsiloxane tetramer (28.5 parts) and 1.5 parts of a cyclic diorganopolysiloxane containing the carboxyl group as shown by the formula

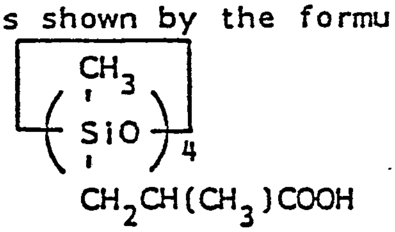

were added to 2 parts of dodecylbenzene sulfonic acid dissolved in 60 parts water with stirring. The mixture was converted into an emulsion by passing it 3 times through a homogenizer emulsifying machine at 400 kg/cm$^2$ at 60°C. This emulsion was kept at 85°C for 2 hours while stirring gently and then kept at 20°C for 4 hours. The emulsion was then neutralized with dimethylformamide. The emulsion was left at room temperature for 3 months in order to study its stability upon standing. Absolutely no changes in the emulsion were observed. To study the dilution stability of this emulsion, the emulsion was diluted 20 times with water and left to stand for one week at room temperature. The diluted emulsion remained homogenous and did not cream. To study the shear strength stability of this emulsion, the emulsion was placed in a blender and treated for 30 minutes at a speed of 3000 rpm. The emulsion did not collapse.

Upon the addition of methyl alcohol the emulsion collapsed. The polymer recovered was a sticky liquid with a viscosity of about 700,000 cs and a refraction index of 1.4056. It was confirmed by the

infrared absorption spectrum, nuclear magnetic resonance analysis and gel permeation chromatography that the polymer was straight chained diorganopolysiloxane consisting of about 90 mol% of

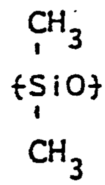

units and about 2 mol% of

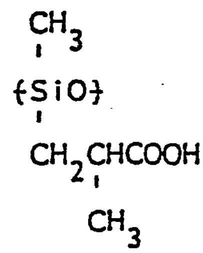

units with hydroxyl endblocking.

Example 2

Dimethylpolysiloxane (28.5 parts) with both ends of the chain closed by hydroxyl groups and a viscosity of 80 cs, 3.5 parts of cyclic diorganopolysiloxane shown by the formula

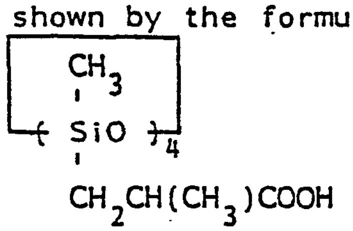

and 0.17 parts of hexamethyldisiloxane as a chain end blocking agent were added to 2 parts dodecylbenzene sulfonic acid dissolved in 60 parts water. The mixture was emulsified by passing it through a homogenizer emulsifying machine 3 times at 400 kg/$cm^2$. After maintaining this emulsion at 85°C for 10 hours with stirring gently, it was kept at 20°C for an additional 2 hours and then neutralized with dimethylformamide. The emulsion was kept at room temperature for 3 months to

study its stability upon standing. No visible changes were observed after storage. To study the dilution stability of this emulsion, the emulsion was diluted 20 times with water and left to stand at room temperature for one week. It remained homogenous and no oil floated to the surface. To study the shear strength stability of this emulsion, the emulsion was placed in a blender and treated for 30 minutes at a speed of 3000 rpm. The emulsion did not collapse.

This emulsion collapsed when methyl alcohol was added. The polymer recovered was a colorless, transparent liquid with a viscosity of 3100 cs and a refraction index of 1.4082. It was confirmed by the infrared absorption spectrum, nuclear magnetic resonance analysis and gel permeation chromatography to be a diorganopolysiloxane with the average composition shown in the following formula

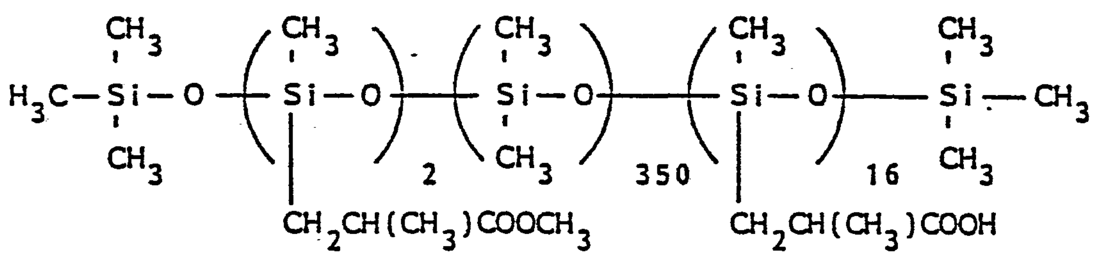

Example 3

A mixture (29 parts) of cyclic dimethylsiloxane tetramer and pentamer and 1.0 parts of diorganodimethoxysilane shown by the formula

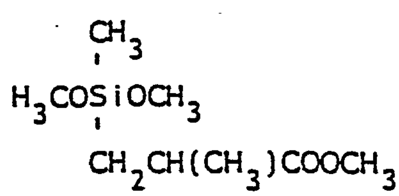

was added to 2 parts of dodecylbenzenesulfonic acid in 60 parts of water with stirring. An emulsion was prepared by twice passing the mixture through a homogenizer emulsifying machine at 450 $kg/cm^2$. The emulsion was then

maintained at 90°C for 16 hours while stirring gently. After an additional 24 hours at 5°C the emulsion was neutralized with triethanolamine. When the stability upon standing, dilution stability and shear strength stability of the emulsion were evaluated in the same way as in Example 1, the same excellent results were obtained.

This emulsion collapsed when methyl alcohol was added. The polymer recovered had a viscosity of about 890,000 cs and a refraction index of 1.4055. It was confirmed by the infrared absorption analysis, nuclear magnetic resonance analysis and gel permeation chromatography that both ends of the polymer chain were closed by hydroxyl groups and that the main chain is represented by the average formula

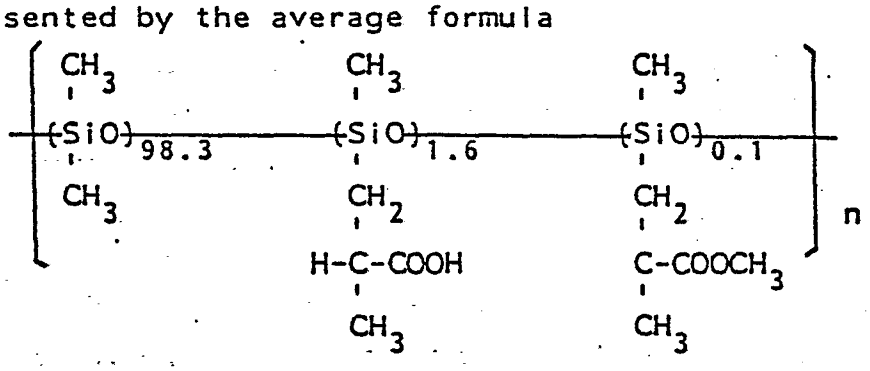

Example 4

Cyclic dimethylsiloxane tetramer (35 parts), 2.0 parts of cyclic diorganopolysiloxane containing the mercapto group shown by the formula

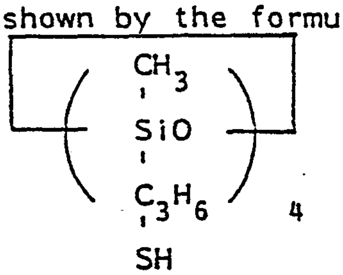

2.2 parts of cyclic diorganopolysiloxane containing the carboxy group shown by the formula

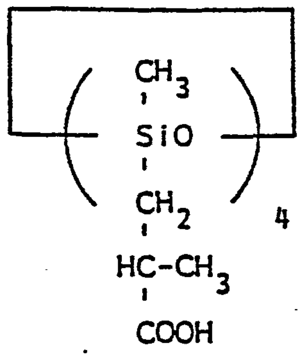

and 0.8 parts of hexamethyldisiloxane as a chain end blocking agent were added to 2 parts dodecylbenzenesulfonic acid in 60 parts water with stirring. An emulsion was prepared by passing the mixture three times through a homogenizer emulsifying machine at 450 $kg/cm^2$. After maintaining the emulsion for 8 hours at 85°C with stirring gently followed by an additional 2 hours at 20°C, the emulsion was neutralized with dimethylformamide. The stability upon standing, dilution stability and shear strength stability of the emulsion obtained in this way were studied in the same way as in Example 1 and the same excellent results were obtained.

This emulsion collapsed when methyl alcohol was added. The polymer recovered was a colorless, transparent liquid with a viscosity of about 500 cs and a refraction index of 1.4088. It was confirmed by the infrared absorption spectrum, nuclear magnetic resonance analysis, and gel permeation chromatography to be diorganopolysiloxane with a mean composition represented by the following formula.

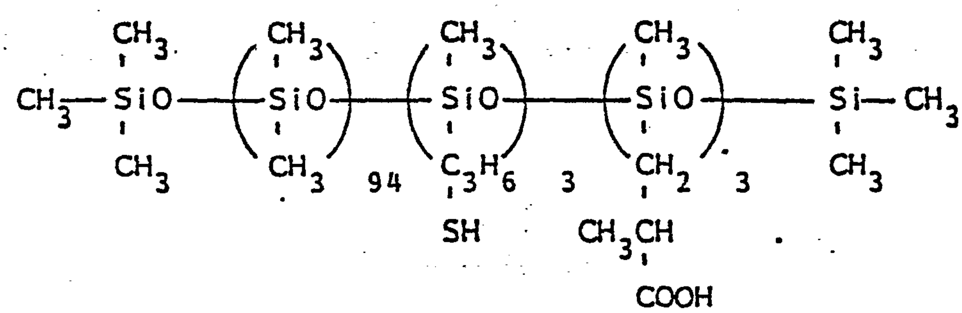

Example 5

A cyclic dimethylsiloxane tetramer (30 parts), 8 parts of cyclic methylvinylsiloxane and 2 parts of a diorganodiethoxysilane expressed by the formula

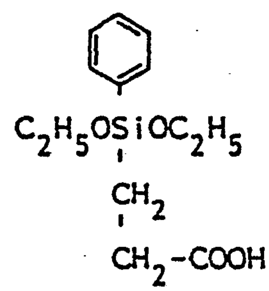

were added to 1.5 parts of a surfactant formula $C_{17}H_{35}(C_2H_4O)_2SO_3H$ dissolved in 60 parts water with stirring. This was made into an emulsion by passing it one time between 20/1000 inch rollers using a colloid mill and twice through a homogenizer emulsifying machine at a pressure of 450 kg/cm$^2$. The emulsion was maintained at 90°C for 3 hours while stirring gently. After further maintaining the emulsion at 20°C for 10 hours, it was made weakly alkaline by aqueous sodium hydroxide solution. The stability upon standing, dilution stability and shear strength stability of the emulsion obtained in this ways were tested in the same way as in Example 1 and the same excellent results were obtained.

This emulsion collapsed with the addition of ethyl alcohol. The polymer recovered was a sticky liquid with a viscosity of about 200,000 cs. It was confirmed from the infrared absorption spectrum, nuclear magnetic

resonance analysis and gel permeation chromatography to be a straight chain diorganopolysiloxane made of about 86.0 mol% of

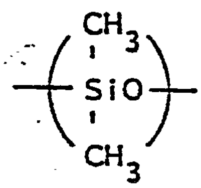

units, about 12.3 mol% of

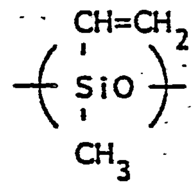

units and about 1.7 mol%

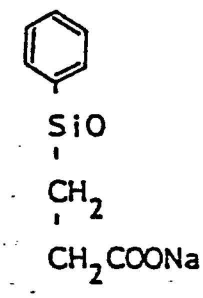

Comparative Example

Mechanical emulsions were prepared from the recovered polymers of Examples 1 and 4. The recovered polymer (15 parts) was added with stirring to 2 parts sodium dodecylbenzenesulfonate in 30 parts water. An attempt was made to form an emulsion by passing the mixture through a homogenizer emulsifying machine three times at 400 kg/cm$^2$ and a temperature of 60°C. Using the recovered polymer of Example 1 it was not possible to prepare an emulsion in this manner. A homogenous emulsion was prepared using the polymer recovered in Example 4.

The mechanical emulsion prepared from the polymer recovered in Example 4 lacked storage stability as it separated into two layers upon storage at room

temperature for one month. This mechanical emulsion also lacked dilution stability as it separated into two layers upon being diluted 20-fold with water. This mechanical emulsion also lacked shear strength stability as the emulsion collapsed upon being treated in a blender at 3000 rpm for 30 minutes.

Claim:

A method of preparing an emulsion of a first diorganopolysiloxane, said method comprising the emulsion co-polymerization of

(A) a liquid cyclic or linear second diorganopolysiloxane with a degree of polymerization of at least three where the organo radicals on the main chain of said second diorganopolysiloxane are selected from the group consisting of alkyl radicals, alkenyl radicals, aryl radicals, cycloalkyl radicals, cycloalkenyl radicals, aralkyl radicals, alkylaryl radicals, haloalkyl radicals, and mercaptoalkyl radicals and the endblocking groups on said linear second diorganopolysiloxane are selected from the group consisting of hydroxyl groups, alkoxy groups, acyloxy groups, and univalent hydrocarbon groups; and a liquid diorganodialkoxysilane or liquid cyclic or linear third diorganopolysiloxane with a degree of polymerization of at least three, where said diorganodialkoxysilane or said third diorganopolysiloxane contains at least one unit of formula

$$\left( \underset{\underset{R^1COOR^2}{|}}{RSiO} \right)$$

where R is a monovalent hydrocarbon radical, $R^1$ is a divalent hydrocarbon radical, and $R^2$ is selected from the group consisting of hydrogen, a univalent hydrocarbon radical, and a univalent cation;

in the presence of

(C) a sulfonic acid surfactant and

(D) water.